(19) Europäisches Patentamt
European Patent Office
Office européen des brevets

(11) Veröffentlichungsnummer: **0 187 348**
**B1**

(12) # EUROPÄISCHE PATENTSCHRIFT

(45) Veröffentlichungstag der Patentschrift: **28.02.90**

(51) Int. Cl. ⁵: **C 08 J 5/24**, C 08 L 71/00, C 08 G 65/40

(21) Anmeldenummer: **85116329.5**

(22) Anmeldetag: **20.12.85**

(54) **Faserverbundwerkstoffe.**

(30) Priorität: **11.01.85 DE 3500705**

(43) Veröffentlichungstag der Anmeldung:
**16.07.86 Patentblatt 86/29**

(45) Bekanntmachung des Hinweises auf die Patenterteilung:
**28.02.90 Patentblatt 90/09**

(84) Bennante Vertragsstaaten:
**BE CH DE FR GB IT LI NL**

(56) Entgegenhaltungen:
**EP-A-0 161 453**
**EP-A-0 193 114**
**DE-A-2 156 346**
**DE-A-3 414 492**
**US-A-4 269 953**
**US-A-4 510 296**

(73) Patentinhaber: **BASF Aktiengesellschaft**
**Carl-Bosch-Strasse 38**
**D-6700 Ludwigshafen (DE)**

(72) Erfinder: **Fischer, Juergen, Dr.**
**Thomas-Mann-Strasse 62**
**D-6700 Ludwigshafen (DE)**
Erfinder: **Zeiner, Hartmut, Dr.**
**Johann-Strauss-Strasse 13**
**D-6831 Plankstadt (DE)**
Erfinder: **Nissen, Dietmar, Dr.**
**Ziegelhaeuser Landstrasse 31**
**D-6900 Heidelberg (DE)**
Erfinder: **Heinz, Gerhard, Dr.**
**Im Vogelsang 2**
**D-6719 Weisenheim (DE)**

**EP 0 187 348 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

**Beschreibung**

Die Erfindung betrifft Formteile aus temperaturbeständigen, mit orientierten Fasern verstärkten Kunststoffen und Verfahren zur Herstellung solcher Faserverbundwerkstoffe durch Aufbringen der Kunststoffe auf Verstärkungsfasern.

Zur Herstellung von Hochleistungsverbundwerkstoffen wurde bisher praktisch ausschließlich mit Epoxidharzen als Matrixmaterial gearbeitet. Diese Harze bieten wegen ihren niedrigen Viskositäten den Vorteil der guten Tränkbarkeit der Verstärkungsfasern, sie haben jedoch den Nachteil, daß daraus hergestelltes Halbzeug nicht beliebig lange lagerbar ist und daß Formgebung und Härtung gleichzeitig erfolgen müssen. Dieser Nachteil entfällt bei Verwendung von temperaturbeständigen thermoplastischen Kunststoffen als Matrixmaterial; hier ergeben sich jedoch andere Probleme: Verwendet man lösliche, amorphe Thermoplaste, wie z. B. Polysulfone oder Polyethersulfone, so erhält man Formteile, die wegen der Löslichkeit des Matrixmaterials in organischen Lösungsmitteln spannungsrißempfindlich sind, was insbesondere ihrem Einsatz im Automobilbereich entgegensteht. Versucht man, unlösliche, teilkristalline Thermoplaste, wie Polyetherketone oder Polysulfidketone, als Schmelze auf Verstärkungsfasern aufzubringen, so erhält man wegen der hohen Viskosität der Schmelze eine zu geringe Benetzung der Fasern.

In der EP-A-56 703 wird vorgeschlagen, Fasergebilde mit Schmelzen niedermolekularer, niedrigviskoser thermoplastischer Polymerer (wobei aber keiner der genannten Polymeren ein aromatischer Polyether mit reaktiven Gruppen ist) zu imprägnieren. Die dabei entstehenden Faserverbundmaterialien zeigen jedoch - insbesondere bei teilkristallinen Thermoplasten - ein unbefriedigendes Zähigkeits- und Dehnungsverhalten. In der EP-A-56 703 ist zwar die Möglichkeit der nachträglichen Erhöhung des Molekulargewichts angedeutet; die empfohlenen Methoden (Festphasenkondensation, Zusatz von Vernetzungsmitteln und Bestrahlung) führen jedoch bei den dort beschriebenen Polymeren zu unkontrollierbaren und unerwünschten Nebenreaktionen und somit zur Herabsetzung der mechanischen Eigenschaften der Fertigteile. Ferner erfordern sie einen hohen apparativen Aufwand.

In der US-A-3 785 916 ist ein Verfahren zur Herstellung eines Verbundwerkstoffes beschrieben, bei dem Kohlenstoff-Fasern mit einer Lösung eines thermoplastischen aromatischen Polymeren, vorzugsweise eines Polysulfons getränkt werden, und der Verbund nach Verdampfen des Lösungsmittels verpreßt wird. Dieses Verpressen soll bei Temperaturen oberhalb des Erweichungspunkts des Polysulfons vorgenommen werden, nach den Beispielen 85° bzw. 95°C oberhalb der Glastemperatur. Unter diesen Bedingungen tritt bei Polysulfonen (die keine reaktiven Gruppen enthalten) keine Vernetzung ein, die zu einer merklichen Erniedrigung der löslichen Anteile führen würde. Würde man statt der Polysulfone die ebenfalls in der US-A-3 785 916 erwähnten unlöslichen bzw. schwerlösliche Polysulfidketone oder Polysulfidsulfone (die zwar Schwefelbrücken enthalten, aber keine Polyether sind) aus der Schmelze auf Kohlenstoff-Fasern aufbringen und den Verbund auf Temperaturen erhitzen, die 85° bzw. 95°C über der Glastemperatur liegen, so erhielte man ebenfalls keine Vernetzung.

In der EP-A-163 894 wird ein Verfahren zur Herstellung von Faserverbundwerkstoffen mit erhöhter Wärmeformbeständigkeit und Spannungsrißbeständigkeit beansprucht, bei dem man einen reaktive Gruppen enthaltenden, vernetzbaren thermoplastischen aromatischen Polyether A mit einer Glastemperatur oberhalb von 80°C, gegebenenfalls zusammen mit einem keine reaktive Gruppen enthaltenden Polymeren B mit einer Glastemperatur oberhalb von 80°C, auf Verstärkungsfasern aufbringt, das entstandene Halbzeug formt und in dem dabei erhaltenen Formteil die Kunststoffmatrix so vernetzt, daß seine Glastemperatur um mindestens 20°C ansteigt, und daß es in niedrigsiedenden chlorierten Kohlenwasserstoffen praktisch nicht mehr löslich ist.

Die Vernetzung wird dabei durch Tempern des Formteils bei Temperaturen oberhalb von 200°C vorgenommen, wobei im allgemeinen mehrere Stunden erforderlich sind.

Es hat sich nun gezeigt, daß auch eine geringere Vernetzung ausreicht, wenn man keine Erhöhung der Wärmeformbeständigkeit des Faserverbundwerkstoffs anstrebt, sondern nur die besonders kritische Spannungsrißanfälligkeit beseitigen will. Man kommt dann mit wesentlich geringeren Temperzeiten aus. Die geringere Vernetzung wirkt sich auch vorteilhaft auf die Zähigkeit der Formteile aus.

Gegenstand der vorliegenden Erfindung ist demzufolge ein Verfahren zur Herstellung von Formteilen aus temperaturbeständigen, mit orientierten Fasern verstärkten Kunststoffen durch Aufbringen von

A. einem vernetzbaren thermoplastischen aromatischen Polyether mit einer Glastemperatur oberhalb von 80°C, welcher reaktive Gruppen enthält, von denen bei thermischer Anregung Vernetzungsreaktionen unter Ausbildung kovalenter Bindungen ausgehen können, und gegebenenfalls
B. einem keine reaktive Gruppen enthaltenden, thermoplastischen Polyethersulfon, Polysulfon, Polyetherimid, Polycarbonat oder aromatischen Polyester mit einer Glastemperatur oberhalb von 80°C,

auf Verstärkungsfasern in Form von Einzelrovings, parallelen Fasergelegen oder Geweben und Formen des entstandenen Halbzeugs, dadurch gekennzeichnet, daß in dem dabei erhaltenen Formteil die Kunststoffmatrix durch 3- bis 200-minütiges Erhitzen auf eine Temperatur, die 100°C bis 200°C über der Glastemperatur des Polyethers A liegt, so vernetzt wird, daß ihre durch eintägige Extraktion in siedendem Dichlormethan bestimmten löslichen Anteile auf einen Wert zwischen 5 und 60 % erniedrigt werden, wobei jedoch die Glastemperatur des Formteils um weniger als 20°C ansteigt.

Vor der Vernetzung enthält die Kunststoffmatrix praktisch keine unlösliche Anteile. Im Fall des Auftrags aus Lösung sind es exakt 0 %; bei den anderen Auftragsarten können bis zu 10 %, vorzugsweise bis zu 5 % und insbesondere bis zu 1 % unlösliche Anteile in der Kunststoffmatrix toleriert werden.

Polymere im Sinne der Erfindung sind solche mit einem Polymerisationsgrad von mindestens 5, vorzugsweise mindestens 10 und insbesondere mindestens 20.

Bevorzugte vernetzbare Polymere A sind aromatische Polyether, die Nitrilgruppen und/oder Schwefelbrücken und/oder Arylthio- bzw. Alkylthio-Gruppen tragen. Unter Arylthio ist die Gruppierung -S-R zu verstehen, wobei R ein gegebenenfalls substituierter Arylrest ist, beispielsweise ein Phenyl-, Naphthyl- oder Pyridyl-Rest, der z. B. Halogen-, Aryl- oder Alkyl-Substituenten tragen kann, unter Alkylthio die Gruppe -S-R', wobei R' ein Alkylrest mit 1 bis 6 Kohlenstoffatomen ist.

Die genannten Gruppierungen können einerseits die Löslichkeit der Polyether A in organischen Lösungsmitteln verbessern, andererseits kann hiervon die Vernetzungsreaktion ausgehen. Bei der Vernetzungsreaktion werden kovalente Bindungen geknüpft.

Weiterhin kann die Löslichkeit von Polyether A durch die Anwesenheit von heterocyclischen Gruppierungen im Polymermolekül, z. B. der Gruppierung -N=, verbessert werden oder durch eine meta-Verknüpfung der Einzelglieder innerhalb der Polymerkette.

Als reaktive Gruppen, von denen eine Vernetzungsreaktion ausgehen kann, können auch folgenden Gruppen fungieren:

$-NC$
$-NCO$
$-NCS$
$-SCN$
$-OCN$
$-C \equiv CR$ $\quad -CR=CR_2$

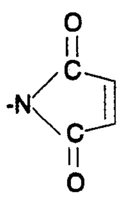

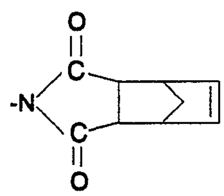

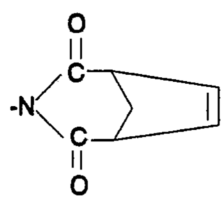

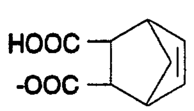

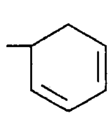

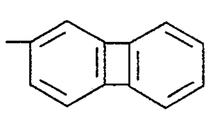

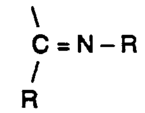

$-S-S-R$

$-NO$

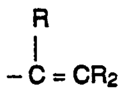

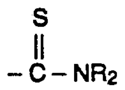

$-CR-PR_2$

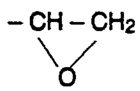

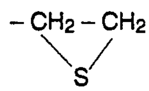

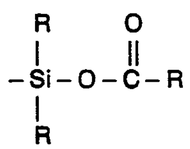

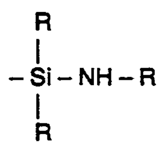

Ferner folgende Gruppierungen in der Polymerkette:

$-S-$

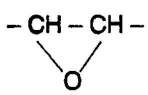

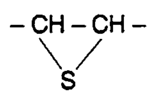

$-S-S-$

$-C \equiv C-$, $-C=C-C=C-$, $-C \equiv C-C \equiv C-$

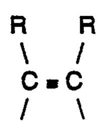

, $-CR=N-$, $-CR=PR_2-$

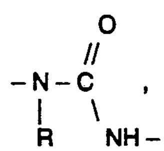

,

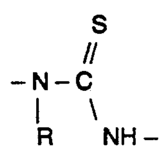

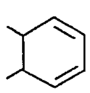

,

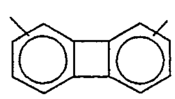

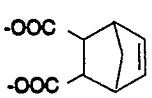

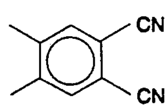

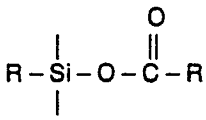

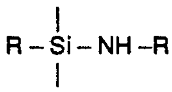

In allen diesen Formeln bedeutet dabei R Wasserstoff oder Aryl.

Unter Umständen können auch Alkylreste und Halogensubstituenten als reaktive Gruppen fungieren.

Wegen der Anwesenheit der reaktiven Gruppen im Polymeren A ist ein Zusatz von chemischen Vernetzungsmitteln bei dem erfindungsgemäßen Verfahren nicht erforderlich.

Besonders bevorzugt sind aromatische Polyether A der allgemeinen Formel -X-O-Y-O-, worin X und Y folgende Bedeutung haben: X ist ein Arylrest, der mindestens eine Nitril- und/oder eine Arylthio-Gruppe trägt; Y ist ein Diphenolrest, vorzugsweise der Bisphenol-S-Rest

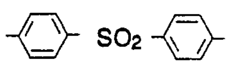 , der Bisphenol-T-Rest 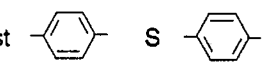 oder der Bisphenol-A-Rest 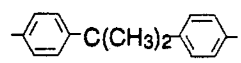

Daneben sind noch die Reste folgender Diphenole geeignet:

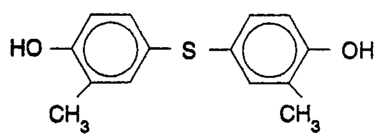

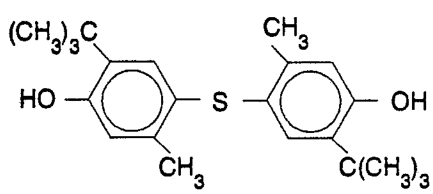

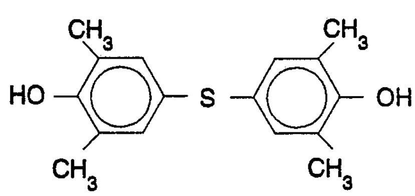

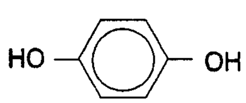

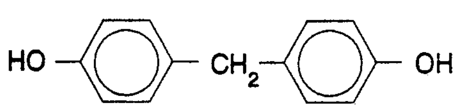

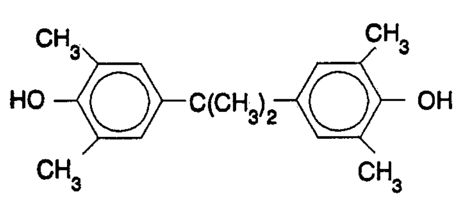

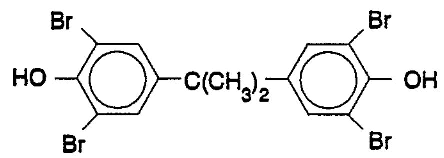

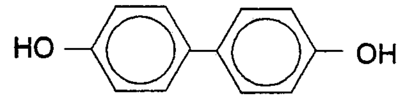

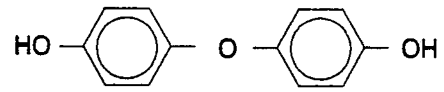

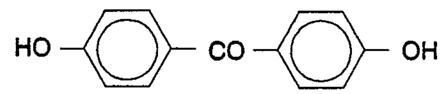

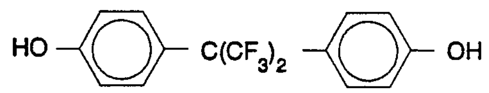

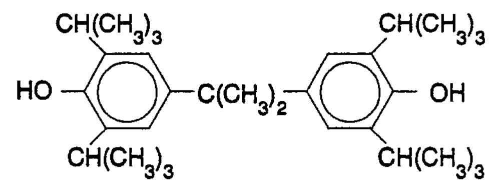

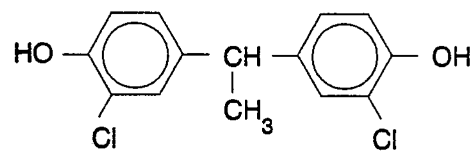

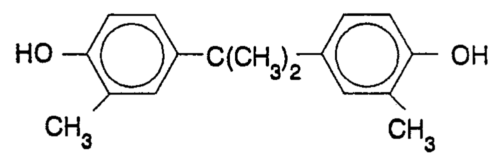

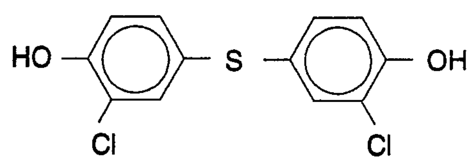

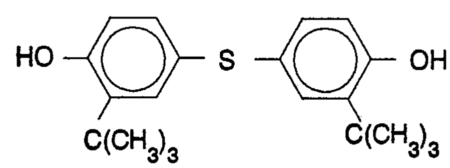

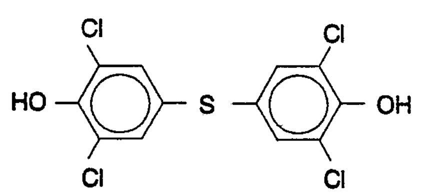

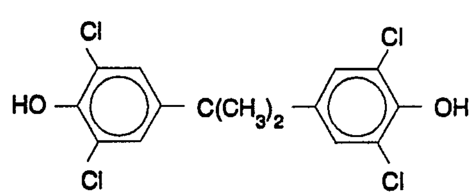

Geeignete Arylreste X sind z. B.:

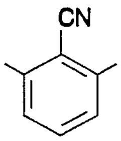 , 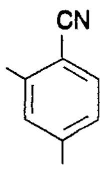 , 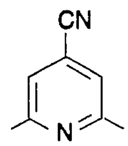 , 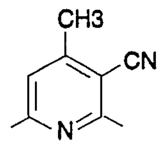 , 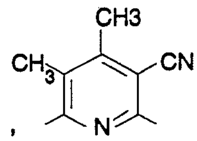

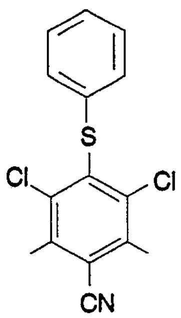

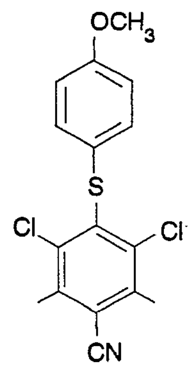

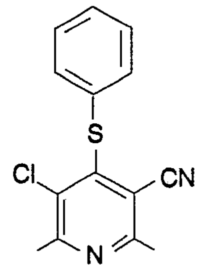

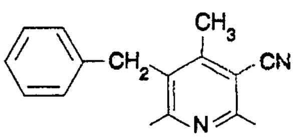 , 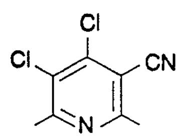 , 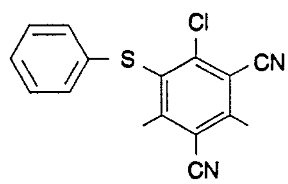

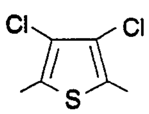 , 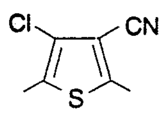 , 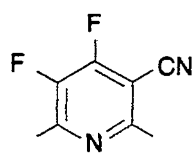 , 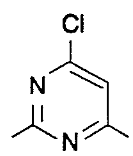

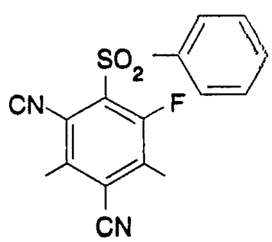 , 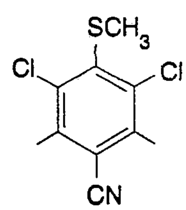

Es können auch Mischungen von zwei oder mehreren verschiedenartigen Polymeren A eingesetzt werden, sowie Copolymere, die verschiedenartige Monomerbausteine X bzw. Y enthalten.

Weitere bevorzugte Polyether A sind solche, die aus Einheiten der Formel

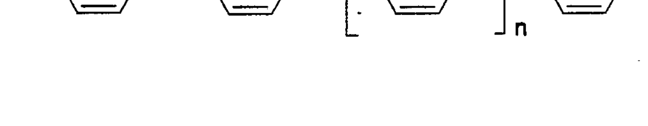

mit Z = $SO_2$ oder CO und n = 1 oder 2, sowie gegebenenfalls außerdem Einheiten der Formel

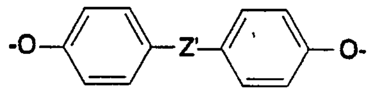

mit Z' = O, CO, $SO_2$ oder $C(CH_3)_2$, aufgebaut sind.

Sie enthalten als einzige reaktive Gruppen Schwefelbrücken. Sie werden hergestellt durch Polykondensation von 4,4'-Thiodiphenol, das teilweise, bevorzugt zu 50 bis 95 Mol.-% durch andere Bisphenole, z. B. Bisphenol A oder Dihydroxy-diphenylsulfon, ersetzt sein kann, mit Dichlordiphenylsulfon oder Difluorbenzophenon.

Solche Copolyether sind besonders gut für den erfindungsgemäßen Zweck geeignet, da sie im Gegensatz zu den Homopolymeren weniger Schwefelbrücken und somit ein geringeres Vernetzungspotential enthalten. Man kann durch die Einstellung der Menge an Comonomeren und damit der Menge an -S-Gruppierungen das Vernetzungspotential gezielt einstellen und auf diese Weise die Geschwindigkeit und das Ausmaß der Vernetzung steuern.

Die Polyether A sind temperaturbeständige Kunststoffe, d. h. ihre Glastemperatur liegt oberhalb von 80°C, vorzugsweise oberhalb von 100°C und insbesondere oberhalb von 130°C. Sie sind vorzugsweise amorph, d. h., sie enthalten keine kristallinen Anteile.

Bei dem erfindungsgemäßen Verfahren kann man entweder nur den Polyether A allein auf die Verstärkungsfasern aufbringen oder eine Mischung des Polymeren A mit einem keine reaktiven Gruppen enthaltenden temperaturbeständigen thermoplastischen Polymeren B, welches ebenfalls eine Glastemperatur oberhalb von 80°C, vorzugsweise oberhalb von 100°C und insbesondere oberhalb von 130°C aufweist. Die Polymeren B sind ebenfalls vorzugsweise amorph und in organischen Lösungsmitteln löslich. In Frage kommen vorzugsweise

Polyethersulfone 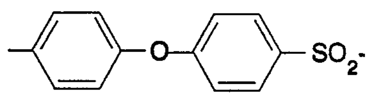 und

Polysulfone 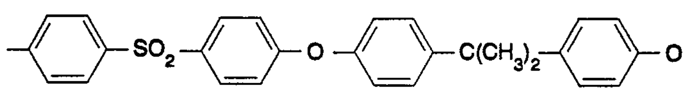 ,

daneben auch Polyetherimide, wie z. B.

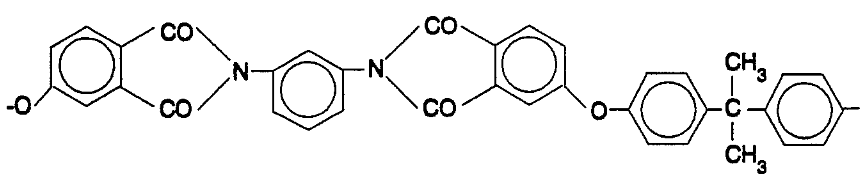 ,

Polycarbonate, aromatische Polyether und aromatische Polyester.

Die Polymeren A und B werden dabei im Gewichtsverhältnis 100 : 0 bis 1 : 99 eingesetzt. Die Polymeren B enthalten zwar selbst keine reaktiven Gruppen, bei der Vernetzungsreaktion werden sie jedoch in die vernetzte Struktur miteingebaut, so daß sie praktisch nicht mehr löslich sind und ihre Spannungsrißanfälligkeit verlieren. Dies ist insbesondere der Fall bei Gemischen aus

A. 2 bis 50 Gewichtsteilen eines aromatischen Polyethers, der aus Einheiten der Formeln
oder

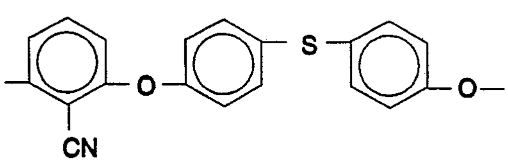

aufgebaut ist

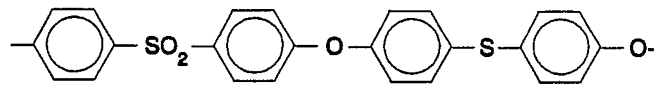

aufgebaut ist
und

B. 98 bis 50 Gewichtsteilen Polyethersulfon oder Polysulfon,

Als Verstärkungsfasern kommen übliche Endlosfaserstränge (Rovings), z. B. aus Glas, Kohlenstoff oder aromatischen Polyamiden (®Aramid-Fasern) in Frage. Sie können als Einzel-Roving, als paralleles Fasergelege oder als Gewebe eingesetzt werden. Das Volumenverhältnis Kunststoff zu Verstärkungsfasern liegt bevorzugt zwischen 70 : 30 und 15 : 85, insbesondere zwischen 55 : 45 und 35 : 65.

Bei einem bevorzugten Herstellverfahren werden die Verstärkungsfasern mit einer Lösung der thermoplastischen Polymeren getränkt. Als Lösungsmittel kommen dabei vorzugsweise niedrigsiedende organische Flüssigkeiten in Frage, insbesondere chlorierte Kohlenwasserstoffe mit einem Siedepunkt unterhalb von 80°C.

Besonders geeignet ist Dichlormethan, sowie eine Mischung aus Dichlormethan und Chloroform im Volumenverhältnis von etwa 1 : 1. Daneben sind auch Trichlorethan, Chloroform, Hexafluorbenzol, fluorierte aliphatische Kohlenwasserstoffe und höher chlorierte Kohlenwasserstoffe geeignet. Grundsätzlich können auch höhersiedende Lösungsmittel verwendet werden, wie z. B. Dimethylformamid oder N-Methylpyrrolidon. Diese Lösungsmittel sind aber schwierig aus dem Halbzeug zu entfernen. Vorzugsweise tränkt man mit 5 bis 40, insbesondere mit 10 bis 30 gew.-%-igen Lösungen. Die Lösungen sollten dabei eine Viskosität unterhalb von 10 000 mPas, vorzugsweise unterhalb von 5 000 mPas und insbesondere zwischen 50 und 1 000 mPas haben. Beim Tränken werden die Rovings einzeln oder in Bandform nebeneinanderliegend durch das Lösungsmittelbad gezogen. Die Rovins sollten dabei möglichst gut gespreizt, d. h. flächig auseinandergezogen sein, was durch bekannte Vorrichtungen bewerkstelligt werden kann.

Der Fasergehalt des getränkten Rovings kann durch die Konzentration der Tränklösung, die Verweilzeit im Bad, sowie durch ein nach dem Tränkbad angeordnetes Quetschwalzenpaar beeinflußt werden. Anschließend an das Tränkbad durchlaufen die getränkten Rovings eine Trockenstrecke, wo die Lösungsmittel, vorzugsweise bei Temperaturen oberhalb von 60°C, insbesondere zwischen 80 und 150°C verdampft werden.

Die imprägnierten, kunstharzgebundenen Prepreg-Rovings können - in Form von Einzelfäden oder von 0,5 bis 2 cm breiten Bändern - klebfrei auf Spulen gewickelt werden. Sie stellen ein lagerstabiles Halbzeug dar, das thermoplastisch weiterverarbeitbar ist. Man kann sie z. B. - gegebenenfalls auch direkt nach dem Imprägnieren und Trocknen - nach dem Durchlaufen einer Vorheizstrecke auf Kerne aufwickeln, dort durch Erhitzen auf Temperaturen zwischen 160 und 300°C verbinden und auf diese Weise rotationssymmetrische Formteile, z. B. Rohre, herstellen.

Ferner kann man den imprägnierten Roving direkt auf einem Wickelkern positionieren und erst dann das Lösungsmittel entfernen.

Flächige Prepregs können hergestellt werden, indem man eine Vielzahl von Rovings parallel durch das Tränkbad führt und das entstehende, vorzugsweise 2 bis 150 cm breite imprägnierte, kunstharzgebundene Roving-Band nach dem Trocknen in plattenförmige Stücke schneidet oder endlos auf Spulen wickelt.

Diese vorzugsweise 0,1 bis 0,5 mm dicken, unidirektional faserverstärkten Prepregs können schichtweise übereinandergestapelt werden, wobei die einzelnen Prepregs in beliebige Winkel zueinander gelegt werden können. Die Stapel können dann durch Verpressen, vorzugsweise bei Temperaturen oberhalb des Erweichungsbereichs der Polymeren, zu Fertigteilen geformt werden. Dabei heizt man den Stapel z. B. außerhalb der Presse auf und legt dann in die Presse ein, die auf einer Temperatur unterhalb des Glaspunktes des Polymeren gehalten wird.

Weiterhin können Gewebe mit Lösungen der Polymeren getränkt werden. Durch Abdampfen des Lösungsmittels erhält man flächige Halbzeuge, die wie oben weiterverarbeitet werden können.

In den erhaltenen Formteilen wird schließlich die Kunststoffmatrix so vernetzt, daß ihre Löslichkeit erniedrigt, vor allem aber die Spannungsrißanfälligkeit beseitigt wird. Der lösliche Anteil der vor der Vernetzung vollständig löslichen Kunststoffmatrix, bestimmt durch eintägige, Extraktion im Soxhlet-Gerät mit siedendem Dichlormethan, wird auf einen Wert zwischen 5 und 60 %, vorzugsweise zwischen 5 und 50 % erniedrigt. Die aus vernetztem Formteil gemessene Glastemperatur darf durch die Vernetzung nur um weniger als 20°C, vorzugsweise um weniger als 10°C und insbesondere um weniger als 5°C angestiegen sein.

Das Vernetzen der Kunststoffmatrix wird zweckmäßigerweise durch Erhitzen der Formteile, gegebenenfalls in Gegenwart von Vernetzungskatalysatoren, vorgenommen. Als Vernetzungskatalysatoren kommen insbesondere Lewis-Säuren, wie z. B. Zinkchlorid oder Aluminiumchlorid in Frage, die den Polymeren in Mengen von vorzugsweise 0,5 bis 5 Gew.% zugemischt worden waren, ferner Metalloxide, wie z. B. Aluminiumoxid und Eisen(II)-oxid sowie Diphenyldisulfid oder Thiophosphorsäureester. Bevorzugt werden die Formteile mindestens 3 Min. lang, insbesondere 10 bis 200 min lang auf Temperaturen oberhalb von 200°C, insbesondere zwischen 250 und 450°C erhitzt, wobei die Temperatur 100 bis 200°C über der Glastemperatur des Polyethers A liegen sollte. Das Erhitzen kann durch Wärmeübertragung mittels Wärmeleitung (z. B. durch Heißverpressen), durch Infrarotbehandlung (z. B. Nachbehandeln der Formteile in einer Strahlungskammer) oder durch Mikrowellenbestrahlung (z. B. in einem Mikrowellenofen oder -hohlleiter) vorgenommen werden, wobei bei den Bestrahlungsmethoden übliche Absorptionshilfsmittel zugesetzt werden können.

Dabei werden Formkörper erhalten, die nicht mehr spannungsrißanfällig sind und auch bei erhöhten Temperaturen, z. B. von 150 bis 200°C noch gute mechanische Eigenschaften aufweisen.

Bei einem anderen bevorzugten Verfahren werden die Verstärkungsfasern mit einer Schmelze der thermoplastischen Polymeren getränkt. Diese Schmelze sollte möglichst niedrigviskos sein, d. h., sie sollte eine Viskosität unterhalb von 100 000 mPas aufweisen. Vorzugsweise sollte die Viskosität unterhalb von 20 000 mPas und insbesondere zwischen 1 000 und 10 000 mPas liegen.

Nach diesem Verfahren werden vorzugsweise Nitril- und/oder Arylthio- bzw. Alkylthio-Gruppen und/oder Schwefel-Brücken tragende, vernetzbare thermoplastische Polyether A mit einer Glastemperatur oberhalb von 80°C verarbeitet. Sie können mit keine reaktiven Seitengruppen tragenden thermoplastischen Polymeren B vermischt sein, wobei hier außer den amorphen Polysulfonen und Polyethersulfonen auch teilkristalline und somit unlösliche temperaturbeständige Polymere, wie Polyetherketone, Polyphenylensulfid, Polysulfidketone oder Polyamide in Frage kommen. Die Verfahrensschritte des Tränkens, Verformens und Vernetzens entsprechen den oben beschriebenen.

Bei einem anderen Verfahren wird Kunststoffpulver, bestehend aus Polyether A sowie gegebenenfalls Polymeren B auf Verstärkungsfasern aufgetragen. Das Pulver hat vorzugsweise eine mittlere Teilchengröße von 5 bis 15 µm. Dabei werden die durch Anblasen mit Luft oder durch andere bekannte Vorrichtungen möglichst gut aufgespreizten Rovings vorgeheizt und durch ein Wirbelbett mit dem Kunststoff-Pulver gezogen. Dabei hat das Kunststoffpulver eine Temperatur knapp unterhalb des Glaspunktes bzw. Schmelzpunktes. Anschließend wird das an den Verstärkungsfasern anhaftende Kunststoffpulver aufgeschmolzen, wobei die Fasern getränkt werden. Daran schließen sich dann die oben beschriebenen weiteren Verfahrensschritte an.

In einem weiteren Verfahren geht man aus von Kunststoff-Fasern, die aus Polyether A und gegebenenfalls Polymeren B bestehen und stellt Gewebe aus diesen Fasern und Verstärkungsfasern her, wobei z. B. die eine Faserart Kettfäden und die andere Faserart Schußfäden sind. Auch Mischfasern (hybrid yarns), die aus verschiedenartigen Einzelfilamenten, z. B. Kohlenstoff-Filamenten und Polymer-Filamenten aufgebaut sind, können eingesetzt werden. Die Kunststoff-Fasern werden beim Formgebungsprozeß aufgeschmolzen und die entstehenden Halbzeuge wie oben beschrieben weiterverarbeitet.

Schließlich kann man auch von einer Kunststoff-Folie aus Polyether A und gegebenenfalls Polymerem B ausgehen und solche Folien in einer oder mehreren Lagen mit Flächengebilden aus Verstärkungsfasern übereinanderdrapieren. Die Lagen werden dann bei Temperaturen oberhalb des Schmelzbereichs der Kunststoffe verpreßt, das entstehende Halbzeug wird auf die beschriebene Weise weiterverarbeitet.

Ein weiterer Gegenstand der Erfindung sind Faserverbundwerkstoffe, enthaltend einen reaktive Nitrilgruppen und/oder Schwefelbrücken und/oder Arylthiogruppen tragenden temperaturbeständigen thermoplastischen aromatischen Polyether A, gegebenenfalls zusammen mit einem keine reaktive Gruppen tragenden temperaturbeständigen thermoplastischen Polyethersulfon, Polysulfon, Polyetherimid, Polycarbonat oder aromatischem Polyester B, die jeweils eine Glastemperatur oberhalb von 100°C vorzugsweise oberhalb von 150°C, aufweisen, sowie 30 bis 80 Vol.-% orientierter Verstärkungsfasern in Form von Einzelrovings, parallelen Fasergelegen oder Gewebe, wobei die Kunststoffmatrix über die reaktiven Gruppen durch 3 bis 200 minütiges Erhitzen auf eine Temperatur, die 100°C bis 200°C über der Glastemperatur des Polyethers A liegt, so vernetzt ist, daß ihre durch eintägige Extraktion mit siedendem Dichlormethan bestimmten löslichen Anteile zwischen 5 und 60 % betragen, wobei jedoch die Glastemperatur des Formteils um weniger als 20°C angestiegen ist.

Derartige Faserverbundwerkstoffe, die sich durch hohe Zähigkeit, gute Wärmeformbeständigkeit und Lösungsmittel- und Spannungsrißbeständigkeit auszeichnen, finden Anwendung als Kraftfahrzeugteile, sowie in der Luft- und Raumfahrtindustrie.

Die in den Beispielen genannten Teile und Prozente beziehen sich auf das Gewicht.

**Beispiele**

a) Herstellung des Polyethers A 1

54,57 g (0,25 Mol) 4,4'-Thiodiphenol und 43,0 g (0,25 Mol) 2,6-Dichlorbenzonitril werden in 420 ml N-Methylpyrrolidon und 190 ml Toluol gelöst und mit 35,88 g (0,26 Mol) wasserfreiem Kaliumcarbonat versetzt. Das Reaktionsgemisch wird unter ständigem Abdestillieren eines azeotropen Gemisches aus Wasser und Toluol innerhalb von 2 Stunden auf 150°C erhitzt. Nach vollständigem Entfernen des Toluols wird die Temperatur auf 180°C gesteigert und das Reaktionsgemisch 5 Stunden bei dieser Temperatur belassen. Durch 30-minütiges Einleiten eines Methylchlorid-Stromes wird die Polykondensation abgebrochen.

Die anorganischen Bestandteile werden nach Zugabe von 300 ml Chlorbenzol abfiltriert und das Polymere in einem Gemisch aus gleichen Teilen 1-%-iger Essigsäure und Methanol gefällt. Nach sorgfältigem Waschen mit Wasser und Methanol wird 12 Stunden bei 100°C im Vakuum getrocknet. Das Polymere besitzt eine Grenzviskosität $[\eta]^{25°C}_{NMP}$ = 0,69 dl · $g^{-1}$ und eine Glastemperatur Tg = 153°C.

0,25 Mol 4,4'-Thiodiphenol und 0,25 Mol 2,6-Dichlor-3-cyan-4-methylpyridin werden wie unter a) beschrieben, polykondensiert, wobei jedoch die Reaktionstemperatur 150°C beträgt.

Das erhaltene Polymere A 2

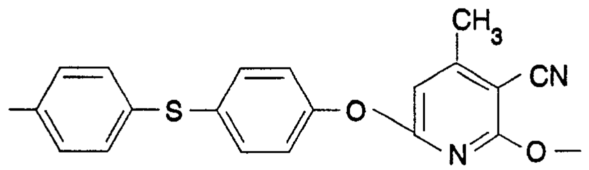

hat eine Glastemperatur von 154°C, eine Grenzviskosität $[\eta]^{25°C}_{NMP}$ von 0,21 dl · $g^{-1}$.

c) Herstellung des Copolyethers A 3

Es wird wie unter b) beschrieben gearbeitet, wobei jedoch 0,125 Mol 2,6-Dichlorbenzonitril und 0,125 Mol 2,6-Dichlor-3-cyan-4-methyl-pyridin eingesetzt wurden. Das erhaltene Copolymere A 3 besitzt eine Glastemperatur Tg von 148°C, die Grenzviskosität beträgt 0,20 dl · $g^{-1}$.

d) Herstellung des Polyether A 4

0,25 Mol 4,4'-Thiodiphenol und 0,25 Mol Dichlordiphenylsulfon werden in 420 ml N-Methylpyrrolidon und 190 ml Toluol gelöst und mit 0,26 Mol wasserfreiem Kaliumcarbonat versetzt. Das Reaktionsgemisch wird unter ständigem Abdestillieren eines azeoptropen Gemisches aus Wasser und Toluol innerhalb von 2 1/2 Stunden auf 150°C erhitzt. Nach vollständigem Entfernen des Toluols wird die Temperatur auf 180°C gesteigert und das Reaktionsgemisch 12 Stunden bei dieser Temperatur belassen. Durch 30-minütiges Einleiten eines Methylchlorid-Stromes wird die Polykondensation abgebrochen.

Die anorganischen Bestandteile werden nach Zugabe von 300 ml Chlorbenzol abfiltriert und das Polymere in einem Gesmich aus gleichen Teilen 1-%-iger Essigsäure und Methanol gefällt. Nach sorgfältigem Waschen mit Wasser und Methanol wird 12 Stunden bei 100°C im Vakuum getrocknet. Die Glastemperatur des erhaltenen Polyetherthioethersulfons beträgt 165°C, die Grenzviskosität 0,80 dl · $g^{-1}$.

e) Herstellung des Copolyethers A 5

ein Gemisch aus 0,18 Mol Bisphenol A, 0,06 Mol 4,4'-Thiodiphenol und 0,24 Mol 4,4'-Dichlordiphenylsulfon wird mit 0,25 ml Kaliumcarbonat versetzt. Es wird wie in d) beschrieben weitgarbeitet. Das erhaltene Copolymere hat eine Glastemperatur von 183°C und eine Grenzviskosität von 1,1 dl · $g^{-1}$.

f) Herstellung des Copolyethers A 6

Ein Gemsich aus 0,125 Mol 4,4-Thiodiphenol, 0,125 Mol Dihydroxdiphenylsulfon und 0,25 Mol 4,4-Dichlordiphenylsulfon wird mit 0,25 Mol Kaliumcarbonat versetzt und wie unter e) beschrieben polykondensiert und aufgearbeitet. Die Glastemperatur beträgt 195°C, die Grenzviskosität 0,70 dl · $g^{1}$.

g) Herstellung des Polyethers A 7

0,3 Mol 4,4-Difluorbenzophenon, 0,3 Mol Thiodiphenol und 500 g Diphenylsulfon wurden unter Inertgas auf 180°C erhitzt und mit 0,31 Mol wasserfreiem Kaliumcarbonat versetzt. Im Abstand von 30 min. wurde die Reaktionstemperatur stufenweise erst auf 200°C, dann auf 250°C und schließlich auf 300°C erhöht und 1 Stunde dabei belassen. Durch Zusatz von 0,5 Mol.% 4,4'-Difluorbenzophenon wurde die Polykondensation abgebrochen. Nach dem Abkühlen wurde das Reaktionsgemisch zerkleinert. Diphenylsulfon und anorganische Bestandteile wurden durch Extraktion mit Aceton und mehrmaliges Waschen mit Wasser und Methanol entfernt. Das erhaltene Polyetherthioetherketon wurde 12 Stunden bei 120°C im Vakuum getrocknet. Seine Glastemperatur beträgt 150°C; kristalline Bereiche schmelzen bei 320°C.

h) Herstellung des Copolyethers A 8

h) Herstellung des Copolyethers A 8

Ein Gemisch aus 0,125 Mol Bisphenol A, 0,125 Mol Thiodiphenol und 0,25 Mol 1,4-Bis-(4-fluorbenzoyl)-benzol wurde unter Inertgas in 600 ml Toloul gelöst und mit 0,26 Mol wasserfreiem Kaliumcarbonat versetzt. Die Polykondensation und Aufarbeitung wurde wie beschrieben durchgeführt.

**Beispiel 1**

Eine 20-%-ige Lösung des Polyethers A 1 in $CH_2Cl_2$ mit einer Viskosität von 800 mPas bei Raumtemperatur wird zum Tränken von Glasfasern (1200 tex-Roving der Fa. Gevetex) benutzt.

Mehrere Fasern werden dabei parallel durch ein Bad mit der Polymerlösung gezogen, anschließend wird das Lösungsmittel bei 80 bis 130°C abgezogen und man erhält flächige, noch thermoplastische, unidirektional verstärkte Prepregs. Jeweils vier davon werden so übereinander drapiert, daß alle Fasern parallel liegen. Das Gelege wird in einer Presse bei 300°C und leichtem Druck etwa 1 Stunde lang aufgeheizt. Danach wird die Temperatur gesteigert bis auf 400°C. Der gesamte Aushärtungsvorgang dauert etwa 2 Stunden.

Die fertige Platte ist dunkel verfärbt, während das Prepreg-Gelege nahezu farblos war. Die vernetzte Platte ist spannungsrißbeständig. Die Glastemperatur Tg ist praktisch nicht angestiegen.

Der Schubmodul beträgt bei 20°C 5000 $N/mm^2$ und sinkt bei 200°C auf 4000, bei 300°C nur auf 3000 $N/mm^2$ ab. Der Faseranteil beträgt 70 Vol.-%. Der lösliche Anteil der Kunststoffmatrix ist auf 30 % abgesunken.

**Beispiel 2**

Es wird wie in Beispiel 1 gearbeitet, wobei jedoch nur ein Glasfaserroving getränkt wird.

Nach Durchlaufen der Trockenstrecke wird der getränkte "Prepreg-Roving" auf eine Spule gewickelt. Er hat einen Glasfaseranteil von 70 Vol.-% und stellt ein lagerfähiges Halbzeug dar.

Der Prepreg-Roving wird auf einer herkömmlichen Wickelmaschine auf einem zylindrischen Dorn, der auf ca. 200°C getempert ist, abgelegt. Der Lagenaufbau ist 90°/90°/+45°/-45°/-45°/+45°/90°/90°, der Dorndurchmesser beträgt 70 mm, das Rohr ist 100 mm lang. Nach dem völligen Bewickeln wird das Rohr 1 Stunde lang in einem Ofen bei 350°C zum Fertigteil vernetzt. Der lösliche Anteil der Kunststoffmatrix ist auf 50 % abgesunken.

**Beispiel 3**

Es wird eine 20-%-ige Lösung hergestellt, die gleiche Teile des Polyethers A 1 und Polyethersulfon mit einer Glastemperatur von 220°C in $CH_2Cl_2$ enthält. Die Viskosität der Lösung beträgt 800 mPas bei Raumtemperatur. Mit dieser Lösung werden Glasfasern (1200 tex. Roving der Fa. Gevetex) getränkt. Dabei werden mehrere Fasern parallel durch ein Bad mit der Polymerlösung gezogen, anschließend wird das Lösungsmittel bei 80 bis 130°C abgezogen und man erhält flächige, unidirektional verstärkte Prepregs.

Jeweils 4 davon werden so übereinander drapiert, daß alle Fasern parallel liegen. Das Gelege wird in einer Presse 2 Stunden lang auf 350°C erhitzt.

Die fertige Platte ist dunkel verfärbt, während das Prepreg-Gelege nahezu farblos war. Die Glastemperatur ist unverändert. Der Schubmodul beträgt bei 20°C 4500 $N \cdot mm^{-2}$. Der Fasergehalt liegt bei 65 Vol.-%.

Bei einem Extraktionsversuch mit $CH_2Cl_2$ ergibt sich, daß der lösliche Anteil der Kunststoffmatrix auf 50 % abgesenken ist.

**Beispiel 4**

Ein 100 cm breites Glasgewebe mit einem Flächengewicht von 280 $g \cdot m^{-2}$ wird mit einer 20-%-igen Lösung des Polyethers A 2 in $CH_2Cl_2$ getränkt, indem man es kontinuierlich durch ein Tränkbad führt. Es durchläuft anschließend einen vertikalen Trockenturm, wobei das Lösungsmittel bei 130 - 150°C abgedampft wird. Das erhaltene Gewebeprepreg wird in Längen von 1 m geschnitten und als Halbzeug gelagert.

16 Gewebeprepregs werden in einer Presse übereinandergelegt und bei 340°C und 10 bar 1 Stund lang verpreßt, wobei sich die Glastemperatur des Polyethers nicht ändert.

Der Faseranteil beträgt 60 Vol. %, der lösliche Anteil der Kunststoffmatrix 40 %.

**Beispiel 5**

Es wird eine 30-%-ige Lösung des Copolyethers A 3 in $CH_2Cl_2$ hergestellt, die bei Raumtemperatur eine Viskosität von 60 mPas aufweist. Durch diese Lösung werden 100 Kohlenstoff-Fasern (T 300 der Fa. TORAY) mit einer Geschwindigkeit von 5 $min^{-1}$ parallel hindurchgezogen, anschließend wird das Lösungsmittel bei 130°C bis 180°C abgedampft und man erhält ein flächiges, thermoplastisches unidirektional verstärktes Prepreg von 300 mm Breite, von dem Stücke einer Länge von 100 cm abgeschnitten werden. 8 dieser Stücke werden so übereinandergestapelt, daß alle Fasern parallel ausgerichtet sind. Das Gelege wird in einer Presse bei 320°C und 10 bar 2 Stunden lang zu einer Probeplatte mit einem Fasergehalt von 60 Vol.-% ausgehärtet. Der lösliche Anteil der Matrix ist auf 55 % abgesunken, die Glastemperatur des Copolyethers blieb praktisch unverändert.

**Beispiel 6**

20 Rovings aus Kohlenstoff-Fasern (T 300 der Fa. TORAY) werden gut gespreizt und mit einer Geschwindigkeit von 0,5 $m \cdot s^{-1}$ durch ein Schmelzebad mit dem Polyethers A 1 gezogen. Die Badtemperatur betrug 280°C. Nach dem Abkühlen wird das 6 cm breite Prepreg-band auf eine Spule aufgewickelt. Es stellt ein lagerfähiges thermoplastisches Halbzeug dar, das bei Bedarf zu Fertigteilen verformt und bei erhöhten Temperaturen vernetzt werden kann.

**Beispiel 7**

Eine 30-%-ige Lösung des Polyethers A 4 in Methylenchlorid mit einer Viskosität von 400 mPas (bei Raumtemperatur) wird zum Tränken eines Glasfasergewebes (92 115 der Fa. Interglas) verwendet. Daß Gewebe wird durch ein Tauchtränkbad gezogen und das Lösungsmittel wird abgedampft. Man erhält ein flächiges Halbzeug. Mehrere Lagen dieses Halbzeugs werden übereinanderdrapiert und in ein Plattenpreßwerkzeug eingelegt. Das Gelege wird bei 320°C 15 min lang getempert. Die erhaltene, dunkel verfärbte Platte ist gegen Methylenchlorid beständig. Die Glastemperatur ist um weniger als 5°C angestiegen. Der Faseranteil des Laminats beträgt 60 Vol.-%, die Festigkeit in Faserrichtung mindestens 300 $N \cdot mm^{-2}$, der Elastizitätsmodul 28 000 $N \cdot mm^{-2}$. Die löslichen Anteile der Kunststoffmatrix sind auf 38 % abgesunken.

**Beispiel 8**

In ähnlicher Weise wie in Beispiel 7 beschrieben, wird ein glasgewebeverstärktes Fertigkeit aus dem Copolyether A 5 hergestellt. Das Laminat wird 30 min bei 320°C getempert. Der lösliche Matrixanteil beträgt dann noch 50 %.

**Beispiel 9**

Ein Kohlenstoffasergewebe (Interglas) wird mit einer 20-%-igen Lösung des Copolyethers A 6 in Dichlormethan, wie in Beispiel 7 beschrieben, getränkt. Das erhaltene Laminat wird bei 380°C 20 min lang verpreßt. Der Faseranteil beträgt 55 Vol.-%, die löslichen Anteile der Matrix wurden zu 45 % bestimmt. Die Glastemperatur des Copolyethers blieb praktisch unverändert.

**Beispiel 10**

Ein 120 cm breites C-Fasergewebe mit einem Flächengewicht von 120 $g/m^3$ der Firma Interglass wird mit einer 20-%-igen Lösung des Polyethers A 7 in Dichlormethan getränkt, indem man es kontinuierlich durch ein Tränkbad führt. Es durchläuft anschließend einen vertikalen Trockenturm, wobei das Lösungsmittel bei 100 - 150°C abgedampft wird. Das erhaltene trockene Prepreg wird kalandriert und auf eine Rolle gewickelt.

32 Gewebeprepregbahnen werden in einer Plattenpresse übereinanderdrapiert und bei 350°C und 5 bar 2 Stunden lang verpreßt, wobei sich die Glastemperatur praktisch nicht ändert. Der Faseranteil im fertigen Laminat beträgt 62 Vol.-%, der lösliche Anteil der Matrix liegt unter 50 %.

**Beispiel 11**

Das Polymere A 8 wird über einen Extruder zu einem Polymerfilm verarbeitet, der sofort nach Entstehen auf ein Faserband aus C-Fasern (T 300 von Toray) aufgelegt wird. Die Durchtränkung der Fasern erfolgt in einer Wärmezone bei Temperaturen unter 300°C. Das getränkte Faserband wird anschließend kalandriert und auf Rollen gewickelt. Es stellt ein beliebig lagerfähiges thermoplastisches Halbzeug dar.

**Beispiel 12**

Eine Lösung von Polyethersulfon und Polyarylletherthioethernitril (nach Beispiel 1 der DE-A-3 414 492) in Dichlormethan wird zum Imprägnieren eines Glasgewebes 92 115 der Firma Interglass eingesetzt. Beide Polymere sind jeweils 10-%-ig, so daß der Feststoffgehalt 20 % beträgt.

Die Imprägnierung und Trocknung erfolgt wie in Beispiel 10 beschrieben. 16 Gewebeprepreg-Lagen werden bei 360°C für 60 Minuten unter einer Plattenpresse verarbeitet, der Druck beträgt 10 bar. Der unlösliche Anteil der Mischmatrix steigt in dieser Zeit von 0 auf ca. 50 %, getestet in $CH_2Cl_2$ als Lösungsmittel.

**Patentansprüche**

1. Verfahren zur Herstellung von Formteilen aus temperaturbeständigen, mit orientierten Fasern verstärkten Kunststoffen durch Aufbringen von

A. einem vernetzbaren thermoplastischen aromatischen Polyether mit einer Glastemperatur oberhalb von 80°C, welcher reaktive Gruppen enthält, von denen bei thermischer Anregung Vernetzungsreaktionen unter Ausbildung kovalenter Bindungen ausgehen können, und gegebenenfalls
B. einem keine reaktive Gruppen enthaltenden, thermoplastischen Polyethersulfon, Polysulfon, Polyetherimid, Polycarbonat oder aromatischen Polyester mit einer Glastemperatur oberhalb von 80°C,

auf Verstärkungsfasern in Form von Einzelrovings, parallelen Fasergelegen oder Geweben und Formen des entstandenen Halbzeugs, dadurch gekennzeichnet, daß in dem dabei erhaltenen Formteil die Kunststoffmatrix durch 3- bis 200-minütiges Erhitzen auf eine Temperatur, die 100°C bis 200°C über der Glastemperatur des Polyethers A liegt, so vernetzt wird, daß ihre durch eintägige Extraktion in siedendem Dichlormethan bestimmten löslichen Anteile auf einen Wert zwischen 5 und 60 % erniedrigt werden, wobei jedoch die Glastemperatur des Formteils um weniger als 20°C ansteigt.

2. Verfahren zur Herstellung von Formteilen nach Anspruch 1, *dadurch gekennzeichnet*, daß man die Verstärkungsfasern mit einer Kunststofflösung einer Viskosität unterhalb von 10 000 mPa.s tränkt, das Lösungsmittel verdampft und dann das Halbzeug formt.

3. Verfahren nach Anspruch 2, *dadurch gekennzeichnet*, daß eine 5 bis 40 gew.-%-ige Lösung in einem organischen Lösungsmittel eingesetzt wird.

4. Verfahren nach Anspruch 3, *dadurch gekennzeichnet*, daß das organische Lösungsmittel ein chlorierter Kohlenwasserstoff mit einem Siedepunkt unterhalb von 80°C ist.

5. Verfahren zur Herstellung von Formteilen nach Anspruch 1, *dadurch gekennzeichnet* daß man die Verstärkungsfasern mit einer Kunststoffschmelze einer Viskosität unterhalb von 100 000 mPa.s imprägniert.

6. Verfahren zur Herstellung von Formteilen nach Anspruch 1, *dadurch gekennzeichnet*, daß man ein Kunststoffpulver auf die Verstärkungsfasern aufträgt und das Kunststoffpulver aufschmilzt.

7. Verfahren zur Herstellung von Formteilen nach Anspruch 1, *dadurch gekennzeichnet*, daß man ein Gewebe auf Basis von Verstärkungsfasern und Kunststoff-Fasern erzeugt, und die Kunststoff-Fasern aufschmilzt.

8. Verfahren zur Herstellung von Formteilen nach Anspruch 1, *dadurch gekennzeichnet*, daß man jeweils eine oder mehrere Lagen eines Flächengebildes aus Verstärkungsfasern und einer Kunststoff-Folie übereinander drapiert, die Lagen verpreßt und die Kunststoff-Folie aufschmilzt.

9. Verfahren nach den Ansprüchen 1 bis 8, *dadurch gekennzeichnet*, daß die aromatischen Polyether mindestens eine Nitrilgruppe und/oder eine Schwefelbrücke und/oder eine Arylthio-Gruppe tragen.

10. Verfahren nach Anspruch 9, *dadurch gekennzeichnet*, daß der aromatische Polyether die Formel -X-O-Y-O- aufweist, worin X ein Arylrest ist, der mindestens eine Nitril- und/oder eine Arylthio-Gruppe trägt, und Y ein zweikerniger Diphenolrest ist.

11. Verfahren nach Anspruch 9, *dadurch gekennzeichnet*, daß der aromatische Polyether aus Einheiten der Formel

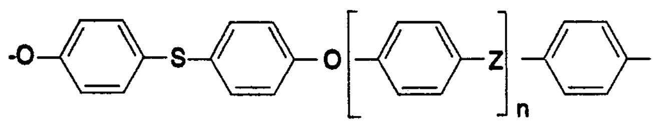

mit Z = $SO_2$ oder CO und n = 1 oder 2, sowie gegebenenfalls außerdem Einheiten der Formel

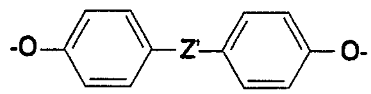

mit Z' = O, CO, $SO_2$ oder $C(CH_3)_2$
aufgebaut ist.

12. Verfahren nach Anspruch 11, *dadurch gekennzeichnet*, daß der aromatische Polyether ein Copolyether ist aus Thiodiphenol, das zu 50 bis 95 Mol.-% durch Biphenol A oder Dihydroxydiphenylsulfon ersetzt ist, und Dichlordiphenylsulfon oder Difluorbenzophenon.

13. Verfahren nach den Ansprüchen 1 bis 8, *dadurch gekennzeichnet*, daß die Polymeren A und B im Gewichtsverhältnis 100 : 0 bis 1 : 99 eingesetzt werden.

14. Verfahren nach den Ansprüchen 1 bis 8, *dadurch gekennzeichnet*, daß das Volumenverhältnis Kunststoff zu Verstärkungsfasern zwischen 70 : 30 und 15 : 85 liegt.

15. Faserverbundwerkstoff, enthaltend einen reaktive Nitrilgruppen und/oder Schwefelbrücken und/oder Arylthiogruppen tragenden temperaturbeständigen thermoplastischen aromatischen Polyether A, gegebenenfalls zusammen mit einem keine reaktive Gruppen tragenden temperaturbeständigen thermoplastischen Polyethersulfon, Polysulfon, Polyetherimid, Polycarbonat oder aromatischem Polyester B, die jeweils eine Glastemperatur oberhalb von 100°C aufweisen, sowie 30 bis 80 Vol.-% orientierter Verstärkungsfasern in Form von Einzelrovings, parallelen Fasergelegen oder Gewebe, dadurch gekennzeichnet, daß die Kunststoffmatrix über die reaktiven Gruppen so vernetzt ist, daß ihre durch eintägige Extraktion mit siedendem Dichlormethan bestimmten löslichen Anteile zwischen 5 und 60 % betragen wobei jedoch die Glastemperatur des Formteils um weniger als 20°C angestiegen ist.

## Claims

1. A process for the production of moldings from a heat-stable plastic reinforced with oriented fibers, by applying
A. a crosslinkable thermoplastic aromatic polyether having a glass transition temperature above 80°C which contains reactive groups which, when thermally stimulated, can be used to initiate crosslinking reactions with formation of covalent bonds and, if required,
B. a thermoplastic polyether sulfone, polysulfone, polyether imide, polycarbonate or aromatic polyester which does not contain any reactive groups having a glass transition temperature above 80°C,
to reinforcing fibers in the form of individual rovings, parallel-laid fabrics or woven fabrics and shaping the resulting semi-finished product, wherein, in the resulting molding, the plastic matrix is crosslinked by heating at 100 - 200°C above the glass transition temperature of polyether A for 3 - 200 minutes to such an extent that its proportion of soluble material, determined by extraction in boiling dichloromethane for one day, is decreased to 5 - 60 % although the glass transition temperature of the molding increases by less than 20°C.

2. A process for the production of moldings as claimed in claim 1, wherein the reinforcing fibers are impregnated with a plastic solution having a viscosity of less than 10 000 mPa.s, the solvent is evaporated and the semi-finished product is then shaped.

3. A process as claimed in claim 2, wherein a 5 - 40 % strength by weight solution in an organic solvent is used.

4. A process as claimed in claim 3, wherein the organic solvent is a chlorohydrocarbon having a boiling point of less than 80°C.

5. A process for the production of moldings as claimed in claim 1, wherein the reinforcing fibers are impregnated with a plastic melt having a viscosity of less than 100 000 mPa.s.

6. A process for the production of moldings as claimed in claim 1, wherein a plastic powder is applied onto the reinforcing fibers and is melted.

7. A process for the production of moldings as claimed in claim 1, wherein a fabric based on reinforcing fibers and plastic fibers is produced, and the plastic fibers are melted.

8. A process for the production of moldings as claimed in claim 1, wherein one or more layers of a sheetlike structure consisting of reinforcing fibers and of a plastic film are draped one on top of the other, the layers are pressed and the

plastic film melted.

9. A process as claimed in any of claims 1 to 8, wherein the aromatic polyether carries one or more nitrile groups and/or one or more sulfur bridges and/or one or more arylthio groups.

10. A process as claimed in claim 9, wherein the aromatic polyether is of the formula -X-O-Y-O-, where X is aryl which carries one or more nitrile groups and/or one or more arylthio groups, and Y is a dinuclear diphenol radical.

11. A process as claimed in claim 9, wherein the aromatic polyether is composed of units of the formula

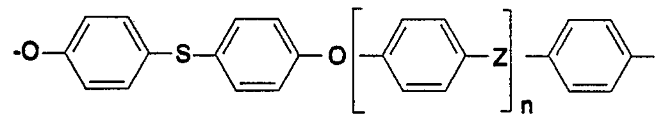

where Z is $SO_2$ or $CO_2$ and n is 1 or 2, and may or may not furthermore contain units of the formula

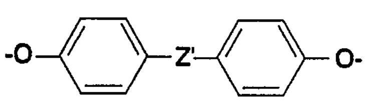

where Z' is O, CO, $SO_2$ or $C(CH_3)_2$.

12. A process as claimed in claim 11, wherein the aromatic polyether is a copolyether obtained from thiodiphenol, as much as 50 - 95 mol% of which is replaced with bisphenol A or dihydroxydiphenyl sulfone, and dichlorodiphenyl sulfone or difluorobenzophenone.

13. A process as claimed in any of claims 1 to 8, wherein the polymers A and B are employed in a weight ratio of from 100 : 0 to 1 : 99.

14. A process as claimed in any of claims 1 to 8, wherein the volume ratio of plastic to reinforcing fiber is from 70 : 30 to 15 : 85.

15. A fiber-reinforced material containing a heatstable thermoplastic aromatic polyether A which carries a reactive nitrile group and/or sulfur bridges and/or arylthio groups, if required together with a heat-stable thermoplastic polyether sulfone, polysulfone, polyether imide, polycarbonate or aromatic polyester B which does not carry any reactive groups, having in each case a glass transition temperature above 100°C, and from 30 to 80 % by volume of oriented reinforcing fibers in the form of individual rovings, parallel-laid fabrics or woven fabrics, wherein the plastic matrix has been crosslinked via the reactive groups by heating at 100 - 200°C above the glass transition temperature of polyether A for 3 - 200 minutes to such an extent that its proportion of soluble material is from 5 to 60 %, determined by extraction with boiling dichloromethane for one day, although the glass transition temperature of the molding has risen by less than 20°C.

**Revendications**

1. Procédé de préparation d'ébauches à partir de matières plastiques résistant à la température et renforcées avec des fibres orientées par application de

A. un polyéther aromatique thermoplastique réticulable ayant une température de transition vitreuse supérieure à 80°C, qui contient des groupements réactifs à partir desquels peuvent se faire, par activation thermique, des réactions de réticulation avec formation de liaisons covalentes, et éventuellement

B. une polyéthersulfone, une sulfone, un polyétherimide, un polycarbonate ou un polyester aromatique, ne contenant pas de groupement réactif et ayant une température de transition vitreuse supérieure à 80°C,

sur des fibres de renforcement sous forme de stratifils, de couches de fibres parallèles ou de fibres tissées et façonnage du produit semi-fini résultant, caractérisé en ce que, dans l'ébauche ainsi obtenue, la matrice de matière plastique est réticulée par chauffage pendant 3 à 200 minutes à une température située à 100°C - 200°C andessus de la température de transition vitreuse de sorte que ses parties solubles déterminées par extraction pendant une journée dans le dichlorométhane bouillant baissent jusqu'à une valeur comprise entre 5 et 60 %, la température de transition

vitreuse ne s'élevant toutefois pas plus de 20°C,

2. Procédé de préparation d'ébauches selon la revendication 1, caractérisé en ce qu'on imprègne les fibres de renforcement avec une solution de matière plastique ayant une viscosité inférieure à 10 000 mPa.s, on évapore le solvant et on façonne ensuite le produit semi-fini.

3. Procédé selon la revendication 2, caractérisé en ce qu'on utilise une solution de 5 à 40 % en poids dans un solvant organique.

4. Procédé selon la revendication 3, caractérisé en ce que le solvant organique est un hydrocarbure chloré ayant un point d'ébullition inférieur à 80°C.

5. Procédé de préparation d'ébauches selon la revendication 1, caractérisé en ce qu'on imprègne les fibres de renforcement avec une matière plastique fondue ayant une viscosité inférieure à 100 000 mPa.s.

6. Procédé de préparation d'ébauches selon la revendication 1, caractérisé en ce qu'on applique une poudre de matière plastique sur les fibres de renforcement et on fait fondre la poudre de matière plastique.

7. Procédé de préparation d'ébauches selon la revendication 1, caractérisé en ce qu'on prépare un tissu à base de fibres de renforcement et de fibres de matière plastique, et on fait fondre les fibres de matière plastique,

8. Procédé de préparation d'ébauches selon la revendication 1, caractérisé en ce qu'on superpose selon le cas une ou plusieurs couches d'une structure plane de fibres de renforcement et une feuille munie de matière plastique, on presse les couches et on fait fondre la feuille mince de matière plastique.

9. Procédé selon les revendications 1 à 8, caractérisé en ce que les polyéthers aromatiques portent au moins un groupement nitrile et/ou un pont soufre et/ou un groupement arylthio.

10. Procédé selon la revendication 9, caractérisé en ce que le polyéther aromatique présente la formule -X-O-Y-O- dans laquelle X est un reste aryle qui porte au moins un groupement nitrile et/ou arylthio et Y est un reste de diphénol divalent.

11. Procédé selon la revendication 9, caractérisé en ce que le polyéther aromatique est constitué de motifs de formule

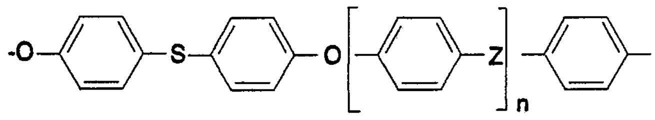

avec Z = $SO_2$ ou CO, et n = 1 ou 2, ainsi éventuellement que d'autres motifs de formule

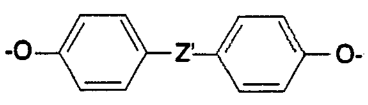

avec Z'= O, CO, $SO_2$ ou $C(CH_3)_2$.

12. Procédé selon la revendication 11, caractérisé en ce que le polyéther aromatique est un copolyéther de thiodiphénol qui est remplacé jusqu'à 50 à 95 % en moles par du bisphénol A ou de la dihydroxydiphénylsulfone, et de dichlorodiphénylsulfone ou de difluorobenzophénone.

13. Procédé selon les revendications 1 à 8, caractérisé en ce que les polymères A et B sont présents dans un rapport pondéral de 100 : 0 à 1 : 99.

14. Procédé selon les revendications 1 à 8, caractérisé en ce que le rapport volumique de la matière plastique aux fibres de renforcement est compris entre 70 : 30 et 15 : 85.

15. Matériau composite à base de fibres, contenant un polyéther aromatique, thermoplastique, résistant à la température et portant un groupement nitrile et/ou un pont soufre et/ou un groupement arylthio réactif, éventuellement avec une

polyéthersulfone, une polysulfone, un polyétherimide, un polycarbonate ou un polyester aromatique B thermoplastique, résistant à la température et ne portant pas de groupement réactif, qui présentent chacun une température de transition vitreuse supérieure à 80°C, ainsi que 30 à 80 % en volume de fibres de renforcement orientées sous forme de fibres stratifils, de couches de fibres parallèles ou de fibres tissées, caractérisé en ce que la matrice de matière plastique est réticulée au niveau des groupements réactifs par chauffage pendant 3 à 200 minutes à une température supérieure de 100°C à 200°C à la température de transition vitreuse du polyéther A, ses parties solubles déterminées par extraction d'une journée dans le dichlorométhane bouillant baissant jusqu'à une valeur de 5 à 60 %, et la température de transition vitreuse ne s'élevant toutefois pas de plus de 20°C.